(19) Europäisches Patentamt
European Patent Office
Office européen des brevets

(11) **EP 4 583 565 A1**

(12) **EUROPEAN PATENT APPLICATION**

(43) Date of publication:
**09.07.2025 Bulletin 2025/28**

(51) International Patent Classification (IPC):
**H04W 24/02** (2009.01)   **H04W 36/00** (2009.01)

(21) Application number: **24150467.9**

(52) Cooperative Patent Classification (CPC):
**H04W 24/02; H04W 36/0055**

(22) Date of filing: **05.01.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **FEKI, Afef**
  **Sceaux (FR)**

• **MASRI, Ahmad**
  **Tampere (FI)**
• **ALI, Amaanat**
  **Espoo (FI)**
• **HASSAN, Sakira**
  **Espoo (FI)**
• **SONG, Jian**
  **Palaiseau (FR)**

(74) Representative: **Page White Farrer**
**Bedford House**
**21a John Street**
**London WC1N 2BF (GB)**

(54) **MACHINE LEARNING MODEL FINGERPRINTING BASED VALIDATION AND PERFORMANCE MONITORING**

(57)    Machine learning model fingerprinting based validation and performance monitoring is provided. A method for machine learning model fingerprinting based validation and performance monitoring may include receiving labelled data for a machine learning model from at least one network device and evaluating a performance of the machine learning model based on the labelled data. The method may also include determining, based on the evaluated performance of the machine learning model, validity of the machine learning model for the at least one network device, and transmitting, to a user device, information on the validity of the machine learning model.

FIG. 5

**EP 4 583 565 A1**

**Description**

TECHNICAL FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to machine learning (ML) model fingerprinting based validation and performance monitoring.

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, fifth generation (5G) radio access technology or new radio (NR) access technology, and/or sixth generation (6G) radio access technology. 5G and 6G wireless systems refer to the next generation (NG) of radio systems and network architecture. 5G and 6G network technology are mostly based on new radio (NR) technology, but the 5G (or NG) network can also build on E-UTRAN radio. It is estimated that NR may provide bitrates on the order of 10-20 Gbit/s or higher and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

SUMMARY:

Various exemplary embodiments may provide an apparatus including at least one processor and at least one memory storing instructions that, when executed by the at least one processor, cause the apparatus at least to receive labelled data for a machine learning model from at least one network device and evaluate a performance of the machine learning model based on the labelled data. The apparatus may also be caused to determine, based on the evaluated performance of the machine learning model, validity of the machine learning model for the at least one network device and transmit, to a user device, information on the validity of the machine learning model.

Certain exemplary embodiments may provide an apparatus including at least one processor and at least one memory storing instructions that, when executed by the at least one processor, cause the apparatus at least to receive, from a serving network device, information on a validity of a machine learning model for another network device and perform a model switching decision based on at least the information on the validity of the machine learning model. The model switching decision may determine to switch from the machine learning model of the serving network device to another machine learning model of the other network device. The apparatus may also be caused to transmit an indication of the model switching decision to the other network device.

Various exemplary embodiments may provide an apparatus including means for receiving labelled data for a machine learning model from at least one network device and means for evaluating a performance of the machine learning model based on the labelled data. The apparatus may also include means for determining, based on the evaluated performance of the machine learning model, validity of the machine learning model for the at least one network device and means for transmitting, to a user device, information on the validity of the machine learning model.

Some exemplary embodiments may provide an apparatus including means for receiving, from a serving network device, information on a validity of a machine learning model for another network device and means for performing a model switching decision based on at least the information on the validity of the machine learning model. The model switching decision may determine to switch from the machine learning model of the serving network device to another machine learning model of the other network device. The apparatus may also include means for transmitting an indication of the model switching decision to the other network device.

Certain exemplary embodiments may provide a method including receiving, by an apparatus, labelled data for a machine learning model from at least one network device and evaluating, by the apparatus, a performance of the machine learning model based on the labelled data. The method may also include determining, by the apparatus, based on the evaluated performance of the machine learning model, validity of the machine learning model for the at least one network device and transmitting, by the apparatus to a user device, information on the validity of the machine learning model.

Various exemplary embodiments may provide a method including receiving, by an apparatus from a serving network device, information on a validity of a machine learning model for another network device and performing, by the apparatus, a model switching decision based on at least the information on the validity of the machine learning model. The model switching decision may determine to switch from the machine learning model of the serving network device to another machine learning model of the other network device. The method may also include transmitting, by the apparatus, an indication of the model switching decision to the other network device.

Some exemplary embodiments may provide a non-transitory computer readable medium including program instructions that, when executed by an apparatus, cause the apparatus at least to receive labelled data for a machine learning model from at least one network device and evaluate a performance of the machine learning model based on the labelled data. The apparatus may also be caused to determine, based on the evaluated performance of the machine learning model, validity of the machine learning model for the at least one network device and transmit, to a user device, information on the validity of the machine learning model.

Certain exemplary embodiments may provide a non-transitory computer readable medium including program instructions that, when executed by an apparatus, cause the apparatus at least to receive, from a serving network device, information on a validity of a machine learning model for another network device and perform a model switching decision based on at least the information on the validity of the machine learning model. The model switching decision may determine to switch from the machine learning model of the serving network device to another machine learning model of the other network device. The apparatus may also be caused to transmit an indication of the model switching decision to the other network device.

Certain exemplary embodiments may provide one or more computer programs including instructions stored thereon for performing one or more of the methods described herein. Some exemplary embodiments may also provide one or more apparatuses including one or more circuitry configured to perform one or more of the methods described herein.

BRIEF DESCRIPTION OF THE DRAWINGS:

For proper understanding of example embodiments, reference should be made to the accompanying drawings, as follows:

FIG. 1 illustrates an example of a configuration of a network topology, according to various exemplary embodiments;
FIG. 2 illustrates an example of a flow diagram for a validation procedure, according to certain exemplary embodiments;
FIG. 3 illustrates an example of a configuration for model validation, according to various exemplary embodiments;
FIG. 4 illustrates an example of a diagram for a model switching delay relative to a generalization factor, according to some exemplary embodiments;
FIG. 5 illustrates an example of a signal diagram, according to certain exemplary embodiments;
FIG. 6 illustrates an example of a flow diagram of a method, according to some exemplary embodiments;
FIG. 7 illustrates an example of a flow diagram of another method, according to certain exemplary embodiments; and
FIG. 8 illustrates a set of apparatuses, according to various exemplary embodiments.

DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for machine learning (ML) model fingerprinting based validation and performance monitoring. Although the devices discussed below and shown in the figures refer to 6G/5G or Next Generation NodeB (gNB) devices and UE devices, this disclosure is not limited to only gNBs and UEs.

It may be readily understood that the components of certain example embodiments, as generally described and illustrated in the figures herein, may be arranged and designed in a wide variety of different configurations. Different reference designations from multiple figures may be used out of sequence in the description, to refer to a same element to illustrate their features or functions. If desired, the different functions or procedures discussed herein may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

3rd Generation Partnership Project (3GPP) may provide specifications for implementing artificial intelligence (AI)/machine learning (ML). Data collection may enable ML models in an NR air interface to be trained by generating a training dataset. Certain existing or legacy data collection procedures in the 6G/5G network may not be sufficient to validate an ML model once it is trained. The validation of the ML model may be performed at a UE or a network entity, such as a gNB, or both. However, there may be some concerns and/or uncertainties with validation procedures. For example, there may be uncertainties as to whether validation by a cell, transmission reception point (TRP), and/or base station (BS) be suitable to be used for ML models across one or more other cells/TRPs/BS(es), whether an update of the ML model in the cell/TRP/BS may have an impact on other cells/TRPs/BS(es), and/or whether the ML model(s) can be shared across different cells.

The concerns and/or uncertainties with validation procedures may result in various scenarios or configurations for the network (e.g., gNB) and a UE to handle the validation processes. For example, in a first scenario, the network may train and validate the ML model and the trained and validated ML model may be stored in the network. In a second example scenario, the network (e.g., gNB) may train and validate the ML model and provide the trained and validated ML model (e.g., model transfer) to the UE (or multiple UEs). In a third example scenario, the UE may train and validate the ML model and store the trained and validated ML model in the UE. In a fourth example scenario, the UE may train and validate the ML model and provide the trained and validated ML model (e.g., model transfer) to the network. In a fifth example scenario, the UE may train and validate the ML model and provide the trained and validated ML model (e.g., model transfer) to the network, which is then aggregated (e.g., by combining the ML model from different UEs) and returned to the UE.

3GPP specifications and agreements may provide that a validation dataset may be determined during a training phase. Conventionally, validation may not attempt to make a generalization of the ML model and the validation process may only be valid in the single cell scenario. The validation may not extend to more than one cell in each of the use cases selected for AI/ML. 3GPP specifications and agreements may define ML model validation as, for example, a subprocess of training to evaluate the quality of an AI/ML model using a dataset different from one used for model training, which may help select model parameters that generalize beyond the dataset for model training. 3GPP specifications and agreements may also define model testing as, for example, a subprocess of training to evaluate the performance of a final AI/ML model using a dataset different from one used for model training and validation. Model validation may assume subsequent tuning of the model after training, whereas model testing may not.

The training, validation, and/or testing dataset for the AI/ML model may be obtained from the same large-scale and/or small-scale propagation parameters. Subsequent evaluation may be used to determine the performance of the AI/ML model when the training dataset and the testing dataset use different parameter settings.

Distributed network-sided models may typically be trained and validated using local data, such as data collected from reported UE measurements. The distributed network-sided models may be localized and each network node (e.g., gNB) may be required to train (online and/or offline) its own ML model. This may also apply to network-sided ML models that may be trained offline, but deployment time validation may be desirable. For example, a UE having mobility may have to change the ML model(s) to be adapted to a dynamic wireless communication environment, such as due to mobility and handover from a source network entity (e.g., access node, gNB, etc.) to another neighboring or target network entity (e.g., neighboring or target access node, gNB, etc.), because there may not be an indicator as to whether the ML model of the source network entity will function at the neighboring or target network entity and vice versa. Each network node (e.g., gNBs) may perform the local model validation at a deployment time independently. This may require constant communication (e.g., requesting and responding messages) between the network and the UE to be able to update, if necessary, the ML model and validate the ML model, which may increase the signaling complexity and/or may delay the UE obtaining the updated ML model. It may be desirable to reduce a number of distributed ML models by reusing the same ML model over multiple network entities (e.g., gNBs), which may be referred to as semi-generalization of the ML model(s).

Various exemplary embodiments may provide technological advantages to address these above-mentioned concerns and implement one or more procedures for reusing the same ML model over multiple network entities (e.g., gNBs), which may be referred to as semi-generalization of the ML model(s). Certain exemplary embodiments may provide for the coexistence of different ML models having different functionalities at the UE.

Some exemplary embodiments may provide one or more procedures for model fingerprinting based validation and for performance monitoring of ML models in which one or more neighboring or target network entities (e.g., gNBs) may cooperate to monitor the performance of newly trained/deployed/updated ML models to determine the validity of the ML models to, for example, inform a model switching decision. The model switching decision may be decided to switch from an ML model of one network entity to an ML model of another network entity, such as switching from the ML model of a serving/source gNB to an ML model of a target or neighboring gNB, after the handover.

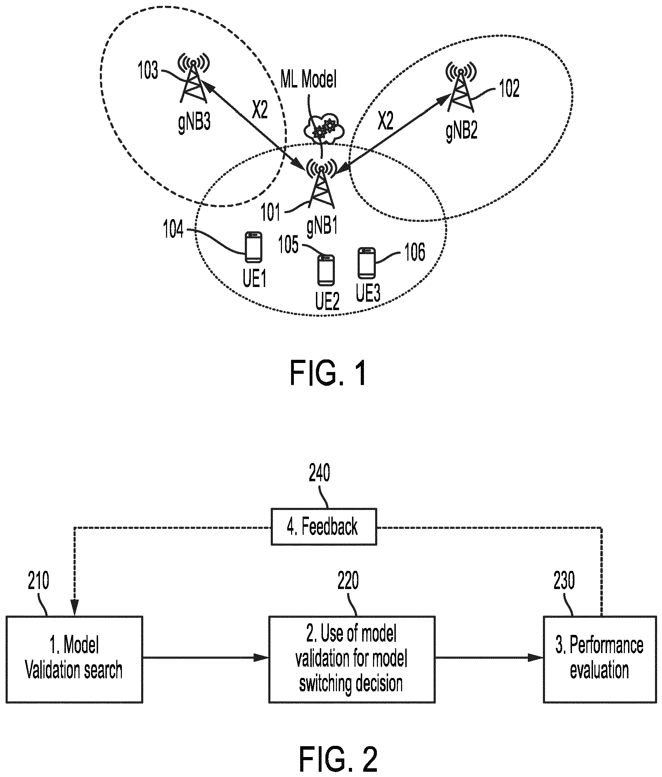

FIG. 1 illustrates an example of a configuration of a network topology for network-sided ML model validation, according to various exemplary embodiments. The network configuration may include a gNB1 101, a gNB2 102, a gNB3 103, a UE1 104, a UE2 105, and a UE3 106. As an example, the gNB1 101 may have a newly deployed and trained model (online or offline). In this example, a data exchange may be performed via an X2/Xn interface between the gNB1 101 and at least one of gNB2 102 and gNB3 103. The capability of the data exchange may be extended to any other inter-gNB type signaling. Before the ML model is initiated, certain exemplary embodiments provide one or more procedures for validating the ML model.

Various exemplary embodiments may provide that a source network entity, such as gNB1 101, may collect and use data from gNB2 102 and gNB3 103 in addition to its own data for an ML model of the gNB 1 101. The gNB 1 101 may monitor the performance of the ML model, which may have been trained on data obtained from the gNB1 101, based on the collected data from gNB2 102 and gNB3 103 and determine whether the ML model may be validated based on a predefined performance criteria (e.g., an accuracy of the ML model is higher than a threshold). Data sharing between the gNBs 101/102/103 may be performed through an intra-radio access network (RAN) signaling interface, e.g., X2 and/or Xn interface between eNBs and/or gNBs, and an F1 interface between a centralized unit gNB (gNB-CU) and a distributed unit gNB (gNB-DU). However, the exemplary embodiments are not limited to only these signaling interfaces, as any suitable data sharing may be used.

Some exemplary embodiments may provide that the gNB1 101 may transfer the ML model to gNB2 102 and/or gNB3 103 for validation. In return, the gNB2 102 and the gNB3 103 may send to the gNB 1101 their performance monitoring results.

Certain exemplary embodiments may provide that a network entity, such as the gNB1 101, may estimate a generalization factor that may be used to decide whether the same model may be used (reused) by the gNB2 102 and/or the gNB3 103. In deciding whether the same model may be used by one or more other gNBs, the gNB1 101 may decide to perform a model switching decision to decide whether to switch to a model of another one of gNB2 102 or gNB3 103, and the model switching may be performed by the UE1 104. The generalization factor may be based on cross network data ML model performance monitoring and validation. In some exemplary embodiments, the gNB1 101 may apply weight factors over shared data and resulted performance monitoring metrics in order to obtain a final validation, such as a key performance indicator (KPI). For example, the KPI may be data rates, data throughput, or the like, of the UEs 104/105/106.

Some exemplary embodiments may provide that a position of a UE1 101 may be used by the network entity, such as gNB1 101, as a factor, or additional factor, for the performance monitoring and validation. Using the position of the UE1 101 may allow the gNB1 101 to delimit a region in the coverage of neighboring cells or target network entities gNB2 102 and gNB3 103 where the ML model of gNB1 101 is valid.

Various exemplary embodiments may provide that when ML mobility is desired or required, the ML model at the UE side may need to change due to its localization (e.g., location relative to a cell) and the mobility (e.g., speed) of the UE. In certain instances, an ML model may be transferred from the network entity (e.g., gNB) to a UE. In such a case, when the ML model is local and has the ability to be used by more than one gNB, the model transfer may be combined with the model mobility, such as a new transfer of the ML model with each handover to a new serving network entity (e.g., gNB) for the UE. Various exemplary embodiments provide for a network entity (e.g., gNB) to evaluate and validate whether one ML model may be commonly used, or partly used, such that the ML model may be used under certain conditions, such as on cell edge area, by other gNBs., This may reduce the need to transfer the ML model every time the UE moves between coverage areas of network entities.

Certain exemplary embodiments may address a situation when an ML model is executed at a UE side and controlled by the network/network entity, including model selection, training, and monitoring. An ML model may be evaluated and considered valid on a per gNB coverage area basis. For this reason, when the UE1 104 is moving from one network entity (e.g., gNB1 101) to another (e.g., gNB2 102), the ML model may be updated by, for example, replacing the ML model for gNB 1 101 with the ML model for gNB2 102. There may be situations in which the ML model for gNB1 101 may still be valid with acceptable performance when moving, either partly or wholly, into the coverage area of the gNB2 102. In these situations, according to various exemplary embodiments, the need for the UE1 104 to update the ML model and switch to a new ML model as soon as it moves into the coverage area of the gNB2 102 may be alleviated.

Certain exemplary embodiments may provide one or more procedures to enable more advanced model performance monitoring and validation using radio frequency (RF) fingerprinting to evaluate the performance and the validity of the ML model outside of an initial identified area, e.g., the neighboring cells/coverage areas. RF fingerprinting information may allow to delimit the part of the coverage area of the gNB2 where the ML model of gNB1 101 is valid. These procedures may allow for alleviating for the UE to update/switch its ML model as soon as it is served by a new network entity (e.g., gNB) during its mobility. During a handover process, the UE may perform multiple processes to ensure ubiquitous service to the end user (e.g., during video streaming service with high QoS/QoE requirements). Certain exemplary embodiments may provide new model fingerprinting based performance monitoring and validation procedures to enable the validation with neighboring cells and the use of the validation output at the UE side for an informed model switching decision.

Some exemplary embodiments may assume that each serving network entity (e.g., gNB) may be in charge of maintaining the ML model running at the UE side to which the gNB serves. When the UE is executing a handover and moving to a new cell, the ML model should be shared by the neighboring or target network entity (e.g., gNB). Certain exemplary embodiments add an in-between procedure as a verification step which may determine whether to send and use a new ML model at the UE at the handover.

FIG. 2 illustrates an example of a flow diagram for a validation procedure, according to certain exemplary embodiments. At 210, the model validation search procedure may be performed in which a serving network entity/base station may perform a model performance monitoring to determine whether a current ML model for a current, serving network entity (e.g., gNB), which is prepared and trained using its locally collected data, can perform with acceptable level in one or more other neighboring cells/coverage areas, either partially or entirely in the other neighboring cells/coverage areas. A validity may be determined based on a performance of the ML model in the one or more other neighboring cells/coverage areas, which is based on the model performance monitoring.

The current serving gNB (e.g., gNB1 101 of FIG. 1) may request labelled data from other gNBs, such as gNB2 102 and/or gNB3 103 of FIG. 1. The labelled data may be a set of inputs and corresponding outputs for the ML model. Using the inputs and expected outputs, the ML model can be trained. To improve the precision of the validation, the current serving gNB may request the labelled data with a specific configuration and/or RF fingerprinting information. The RF fingerprinting information may be reference signal received power (RSRP), reference signal received quality (RSRQ), signal to interference and noise ratio (SINR), timing advance (TA), and/or the like, measurements which allows to identify an approximate location from which the labeled data is taken within a neighboring cell coverage area. The current serving gNB may provide a more precise indication of a condition of the model validity, such as, for example, the ML model for gNB1 101 may be valid for a UE measured RSRP from gNB2 102 within a range -120 and -80 dBm.

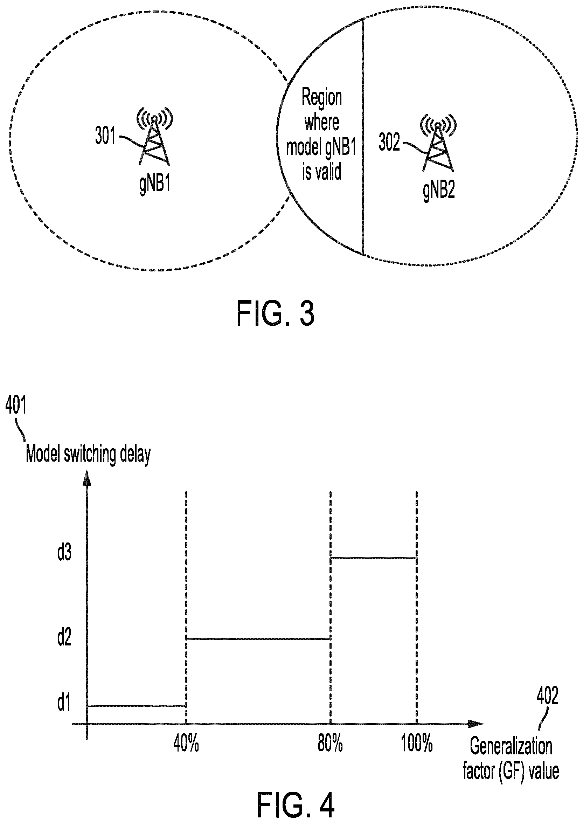

FIG. 3 illustrates an example of a configuration for model validation, according to various exemplary embodiments. FIG. 3 shows a cell coverage area/region in gNB2 302 where the ML model of the gNB1 301 may be valid. The neighboring cell(s) (e.g., gNB2 302) may provide the current serving gNB (e.g., gNB1 301) with labeled dataset(s) and related RF fingerprinting information, defined as: $\tau \times \{RSRP_i, TA_i\}$, in which the RF fingerprinting information may be indicated as $\tau$. After evaluation, the current serving gNB (e.g., gNB1 301) may identify a subset of the dataset where the ML model performance is acceptable, such as where a model accuracy is higher than a predefined threshold. These corresponding RF fingerprinting attributes may be used to identify or determine where the ML model for the current serving gNB (e.g., gNB1 301) is valid in gNB2 302 coverage area.

Some exemplary embodiments may provide that current serving gNB (e.g., gNB1 301) may perform cross performance monitoring and validation using labeled data received from one or more neighboring cells (e.g., through an X2 and/or Xn interface upon request. The current serving gNB (e.g., gNB1 301) may compute a generalization factor which indicates the extent to which ML model for current serving gNB can be applicable to other neighboring cells/coverage areas. The generalization factor may be defined by Equation (1) as follows:

$$GF_{1,2} = \%(|f_1(x_2) - y_2| < \epsilon) \qquad (1)$$

In Equation (1), $GF_{1,2}$ may refer to the generalization factor of a model for the current serving gNB (e.g., gNB1 301) related to a neighboring or target gNB (e.g., gNB2 302), $f_1$ may be the trained model of current serving gNB (e.g., gNB1 301), $(x_2, y_2)$ may be the labeled dataset of the neighboring or target gNB (e.g., gNB2 302), and $\epsilon$ may be a desired threshold model accuracy. The generalization factor may be an indicator of the model performance monitoring across different neighboring or target network entities (e.g., gNBs).

Certain exemplary embodiments may assume the UE position availability. The RF fingerprinting information/attributes which may be provided as with the labeled dataset of the neighboring or target gNB (e.g., gNB2 302), may include a geographical position. In this way, the output of the validation search may be provided as a set of positions, such as: $\{X_i\}_{i \in [1, N]}$.

Returning the FIG. 2, at 220, the procedures of various exemplary embodiments may proceed with using the model validation of the procedure 210 for performing a model switching decision. The model validation procedure may use the performance monitoring and validation search output in order to perform the ML model switching decision at the UE side during mobility. In some exemplary embodiments, the performance and validity of the ML model may be identified in the neighboring or target gNB (e.g., gNB2 302) using the RF fingerprinting attributes, such RSRP, RSRQ, SINR, TA, and the like. The ML model for the current serving gNB (e.g., gNB1 301), which may be deployed at the UE side, may be valid when, for example, measured RF fingerprinting attributes in the neighboring or target gNB (e.g., gNB2 302) satisfy a condition, such as being within the range or threshold identified in procedure 210. When this condition is not satisfied, the model switching decision may be triggered at the UE to replace the model for the current serving gNB (e.g., gNB1 301) with a model for the neighboring or target gNB (e.g., gNB2 302).

In certain exemplary embodiments, when the UE is moving from the current serving gNB (e.g., gNB1 301) to the neighboring or target gNB (e.g., gNB2 302), the current serving gNB may provide the generalization factor $GF_{1,2}$ and determine whether to keep using the ML model for the current serving gNB or to switch to the ML model for the neighboring or target gNB (e.g., gNB2 302) pursuant to the result of the model switching decision.

FIG. 4 illustrates an example of a diagram showing a model switching delay (401) relative to a generalization factor (402), according to some exemplary embodiments. The model switching decision may be performed based on the generalization factor $GF_{1,2}$ (402) to set up a delay (401) to receive the new ML model (e.g., the ML model for the neighboring or target gNB (e.g., gNB2)). For example, in a case where a generalization factor $GF_{1,2}$ equal to 40% may mean that the model validity is limited and the model switching may be performed more rapidly as compared to a case where the generalization factor $GF_{1,2}$ is equal to 80%. An example of the delay is shown in FIG. 4. FIG. 4 illustrates an example where a lower generalization factor (402) may indicate that the ML model is not sufficiently generalized to be commonly used by both the current and neighboring or target gNBs, and the model switching decision should be performed with more rapidly to avoid risk of performance degradation, as compared to a higher generalization factor (402) which may have a longer delay.

In certain exemplary embodiments, the performance and validity of the ML model may be identified in the neighboring or target gNB (e.g., gNB2) using a set of positions, such as: $\{X_i\}_{i \in [1,N]}$. The network may then select a maximum threshold distance $d_{th}$ which indicates that the ML model for the current serving gNB (e.g., gNB1) at the UE side may be valid under the following condition:

$$min \ (distance \ (UE, \{X_i\}_{i \in [1,N]})) \le d_{th} \qquad\qquad (2)$$

When the condition (2) is satisfied, the ML model for the current serving gNB (e.g., gNB1 101/301) may still be valid when the current position of the UE is within a threshold range (e.g., distance) to any position within the identified validation positions $\{X_i\}_{i \in [1,N]}$ from procedure 210.

Returning the FIG. 2, at 230, the procedures of various exemplary embodiments may provide for monitoring the performance of the ML model (before and after switching) without using ground truth. The monitoring of the performance of the ML model may be based on preselected performance KPI, such as UE throughput. Returning the FIG. 2, at 240, a feedback loop may be provided so that the output of the performance monitoring can be provided to the model validation search in procedure 210 of FIG. 2, to enhance the model validation search for subsequent iterations of procedures 210-240. When the performance shows some degradations, the network may be more conservative and set up more stringent constraints on the validation conditions, such as lowering the threshold distance or the threshold values on the generalization factor.

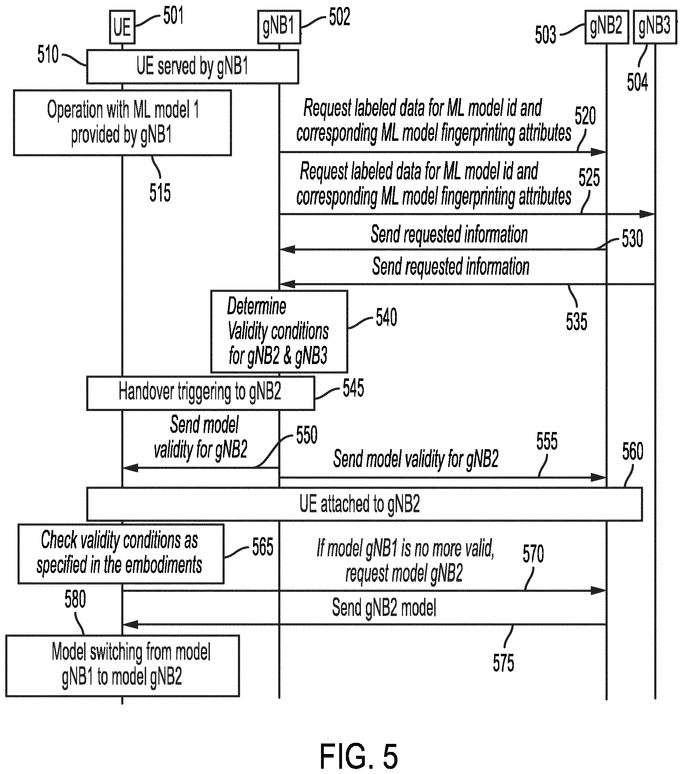

FIG. 5 illustrates an example of a signal diagram, according to certain exemplary embodiments. The signal diagram shows signaling between a UE 501, a current serving gNB 502, and neighboring or target gNBs 503/504. At 510, the UE 501 may have a radio resource control (RRC) connection established with the current serving gNB 502. At 515, the UE 501 may execute one or more operations using an ML model which was provided to the UE 501 by the current serving gNB 502. The model may be trained using local data by the current serving gNB 502. The one or more operations may include testing the ML model, executing the ML model, and the like. At 520 and 525, the current serving gNB 502 may provide a request to each of the neighboring or target gNBs 503/504. The requests may request that the neighboring or target gNBs 503/504 provide the current serving gNB 502 with labeled data for an ID of an ML model for the neighboring or target gNBs 503/504 and corresponding RF fingerprint information/attributes. At 530 and 535, the neighboring or target gNBs 503/504 may respond to the request by providing the current serving gNB 502 with the labeled data and the RF fingerprint information/attributes.

At 540, the current serving gNB 502 may derive a model validation condition to be evaluated by the UE 501. The model validation may be performed for each of the neighboring or target gNBs 503/504. At 545, the UE 501 may be triggered to perform a handover from the gNB 502 to the gNB 503, such as due to mobility of the UE 501. At 550, the gNB 502 may provide a validity determination of whether the ML model for the gNB 502 may be valid for the gNB 503 to the UE 501. At 555, the gNB 502 may also provide the validity determination of whether the ML model for the gNB 502 may be valid for the gNB 503. At 560, the UE may have completed the handover to the gNB 503 and established a connection to the gNB 503.

At 565, the UE 501 may determine whether one or more conditions for validity of the current ML model is satisfied and perform a model switching decision. At 570, when the one or more conditions for validity are not satisfied, the UE 501 may request the ML model for the gNB 503 from the gNB 503. At 575, the gNB 503 may provide its ML model to the UE 501. At 580, the UE 501 may perform model switching to switch from using the ML model for gNB 502 to the ML model for gNB 503.

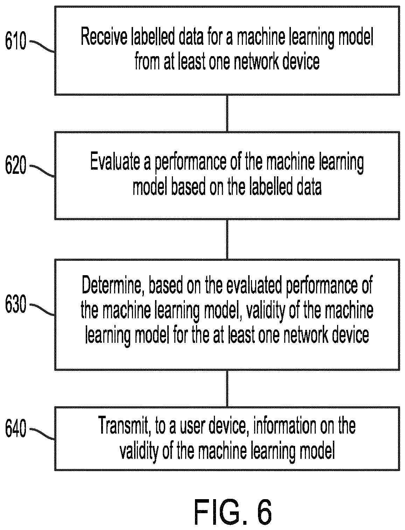

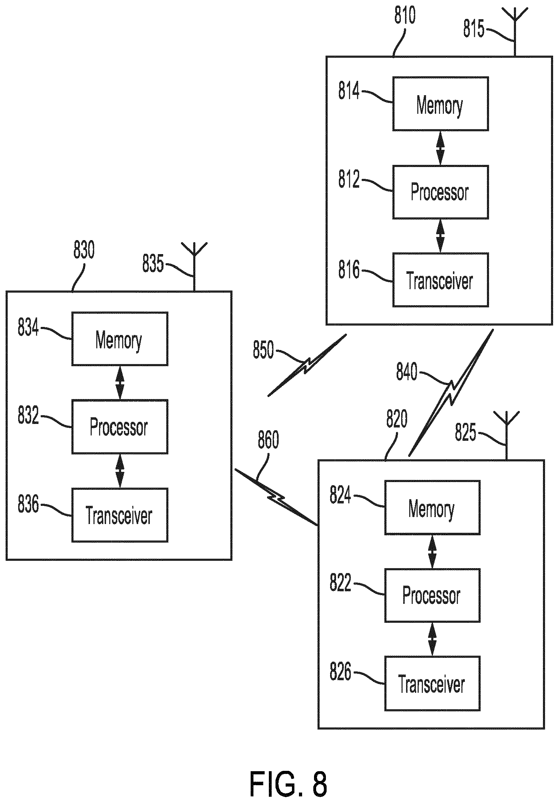

FIG. 6 illustrates an example flow diagram of a method, according to certain exemplary embodiments. In an example embodiment, the method of FIG. 6 may be performed by a network element/entity, or a group of multiple network entities in a 3GPP system, such as LTE, 5G-NR, or 6G. For instance, in an exemplary embodiment, the method of FIG. 6 may be performed by a network node or network entity, such as a gNB, similar to apparatus 810 illustrated in FIG. 8.

According to various exemplary embodiments, the method of FIG. 6 may include, at 610, receiving labelled data for a machine learning model from at least one network device, and at 620, evaluating a performance of the machine learning model based on the labelled data. At 630, the method may also include determining, based on the evaluated performance of the machine learning model, validity of the machine learning model for the at least one network device, and at 640, transmitting, to a user device, information on the validity of the machine learning model.

Certain exemplary embodiments may provide that the labelled data may include radio frequency fingerprinting information, and the radio frequency fingerprinting information may include at least one of reference signal received power measurements, reference signal received quality measurements, signal to interference and noise ratio measurements, or timing advance measurements. The validity of the machine learning model may be determined based on at least one of the radio frequency fingerprinting information being lower than a first threshold, the radio frequency fingerprinting information being higher than the first threshold, a model generalization factor of the machine learning model for the at least one network device being lower than a second threshold, the model generalization factor of the machine learning model for the at least one network device being higher than the second threshold, a distance between the apparatus and the user device being lower than a third threshold, or the distance between the apparatus and the user device being higher than the third threshold.

Some exemplary embodiments may also provide the information on the validity of the machine learning model includes a model switching decision to determine to switch from the machine learning model to another machine learning model. The evaluation of the performance of the machine learning model may be based on at least a throughput of the user device. The model generalization factor may be based on a performance of the machine learning model of the apparatus which is based on the labelled data received from the at least one network device.

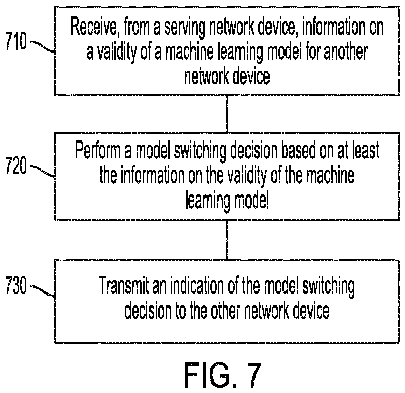

FIG. 7 illustrates an example flow diagram of a method, according to certain exemplary embodiments. In an example embodiment, the method of FIG. 7 may be performed by a device or user equipment within a network in a 3GPP system, such as LTE, 5G-NR, or 6G. For instance, in an exemplary embodiment, the method of FIG. 7 may be performed by a UE, similar to apparatus 820 illustrated in FIG. 8.

According to various exemplary embodiments, the method of FIG. 7 may include, at 710, receiving, from a serving network device, information on a validity of a machine learning model for another network device, and at 720, performing a model switching decision based on at least the information on the validity of the machine learning model. The model switching decision may determine to switch from the machine learning model of the serving network device to another machine learning model of the other network device. At 730, the method may also include transmitting an indication of the model switching decision to the other network device.

Certain exemplary embodiments may provide that the information on the validity of the machine learning model is based on radio frequency fingerprinting information, and the radio frequency fingerprinting information may include at least one of reference signal received power measurements, reference signal received quality measurements, signal to interference and noise ratio measurements, or timing advance measurements. The validity of the machine learning model may be determined based on at least one of a radio frequency fingerprinting information being lower than a first threshold, the radio frequency fingerprinting information being higher than the first threshold, a model generalization factor of the other machine learning model of the other network device being lower than a second threshold, the model generalization factor of the other machine learning model of the other network device being higher than the second threshold, a distance between the apparatus and the serving network device being lower than a third threshold, or the distance between the apparatus and the serving network device being higher than the third threshold. The model generalization factor of the machine learning model of the serving network device may be based on a performance of the machine learning model, which is based on labelled data received from the other network device. The performance of the machine learning model may be based on at least a throughput of the apparatus.

FIG. 8 illustrates a set of apparatuses 810, 820, and 830 according to various exemplary embodiments. In the various exemplary embodiments, the apparatus 810 may be an element in a network or associated with the network, or a network entity, such as a gNB. For example, gNBs 101-103/301/502 according to various exemplary embodiments discussed above may be an example of apparatus 810. It should be noted that one of ordinary skill in the art would understand that apparatus 810 may include components or features not shown in FIG. 8. Further, apparatus 820 may be an element in a communications network or network entity, such as UE, RedCap UE, SL UE, mobile equipment (ME), mobile station, mobile device, stationary device, IoT device, or other device. For example, UEs 104-106/501 according to various exemplary embodiments discussed above may be examples of apparatus 820. It should be noted that one of ordinary skill in the art would understand that apparatus 820 may include components or features not shown in FIG. 8. In addition, apparatus 830 may be an element in a network or associated with the network, or a network entity, such as a gNB. For example, gNBs 101-103/302/503/504 according to various exemplary embodiments discussed above may be an example of apparatus 830. It should be noted that one of ordinary skill in the art would understand that apparatus 830 may include components or features not shown in FIG. 8.

In some example embodiments, apparatuses 810, 820 and/or 830 may include one or more processors, one or more computer-readable storage medium (for example, memory, storage, or the like), one or more radio access components (for example, a modem, a transceiver, or the like), and/or a user interface. In some example embodiments, apparatuses 810, 820 and/or 830 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 8, apparatuses 810, 820 and/or 830 may include or be coupled to processors 812, 822, and 832, respectively, for processing information and executing instructions or operations. Processors 812, 822, and 832 may be any type of general or specific purpose processor. In fact, processors 812, 822, and 832 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 812 (and 822/832) for each of apparatuses 810, 820 and/or 830 is shown in FIG. 8, multiple processors may be utilized according to other example embodiments. For example, it should be understood that, in certain example embodiments, apparatuses 810, 820 and/or 830 may include two or more processors that may form a multiprocessor system (for example, in this case processors 812, 822, and 832 may represent a multiprocessor) that may support multiprocessing. According to certain example embodiments, the multiprocessor system may be tightly coupled or loosely coupled to, for example, form a computer cluster.

Processors 812, 822, and 832 may perform functions associated with the operation of apparatuses 810, 820 and/or 830, respectively, including, as some examples, precoding of antenna gain/phase parameters, encoding and decoding of individual bits forming a communication message, formatting of information, and overall control of the apparatuses 810, 820 and/or 830, including processes illustrated in FIGs. 1-7.

Apparatuses 810, 820 and/or 830 may further include or be coupled to memory 814, 824, and/or 834 (internal or external), respectively, which may be coupled to processors 812, 822, and 832, respectively, for storing information and instructions that may be executed by processors 812, 822, and 832. Memory 814 (and memory 824 and memory 834) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 814 (and memory 824 and memory 834) can be comprised of any combination of random access memory (RAM), read only memory (ROM), static storage such as a magnetic or optical disk, hard disk drive (HDD), or any other type of non-transitory machine or computer readable media. The instructions stored in memory 814, memory 824 and memory 834 may include program instructions or computer program code that, when executed by processors 812, 822, and 832, enable the apparatuses 810, 820 and/or 830 to perform tasks as described herein.

In certain example embodiments, apparatuses 810, 820 and/or 830 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 812, 822, and 832 and/or apparatuses 810, 820 and/or 830 to perform any of the methods illustrated in FIGs. 1-7.

According to various exemplary embodiments, the apparatus 810 may include at least one processor 812, and at least one memory 814, as shown in FIG. 8. The memory 814 may store instructions that, when executed by the processor 812, cause the apparatus 810 to receive labelled data for a machine learning model from at least one network device and evaluate a performance of the machine learning model based on the labelled data. The apparatus 810 may also be caused to determine, based on the evaluated performance of the machine learning model, validity of the machine learning model for the at least one network device, and transmit, to a user device, information on the validity of the machine learning model.

According to various exemplary embodiments, the apparatus 820 may include at least one processor 822, and at least one memory 824, as shown in FIG. 8. The memory 824 may store instructions that, when executed by the processor 822, cause the apparatus 820 to receive, from a serving network device, information on a validity of a machine learning model for another network device and perform a model switching decision based on at least the information on the validity of the machine learning model. The model switching decision may determine to switch from the machine learning model of the serving network device to another machine learning model of the other network device. The apparatus 820 may also be caused to transmit an indication of the model switching decision to the other network device.

In some exemplary embodiments, apparatuses 810, 820 and/or 830 may also include or be coupled to one or more antennas 815, 825, and 835 for receiving a downlink signal and for transmitting via an uplink from apparatuses 810, 820 and/or 830, respectively. Apparatuses 810, 820 and/or 830 may further include transceivers 816, 826, and 836, respectively, configured to transmit and receive information. The transceiver 816, 826, and 836 may also include a radio interface that may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 816, 826, and 836 may be respectively configured to modulate information on to a carrier waveform for transmission and demodulate received information for further processing by other elements of apparatuses 810, 820 and/or 830. In other example embodiments, transceivers 816, 826, and 836 may be capable of transmitting and receiving signals or data directly. Additionally or alternatively, in some example embodiments, apparatuses 810, 820 and/or 830 may include an input and/or output device (I/O device). In certain example embodiments, apparatuses 810, 820 and/or 830 may further include a user interface, such as a graphical user interface or touchscreen.

In certain example embodiments, memory 814, 824, and 834 store software modules that provide functionality when executed by processors 812, 822, and 832, respectively. The modules may include, for example, an operating system that provides operating system functionality for apparatuses 810, 820 and/or 830. The memory may also store one or more functional modules, such as an application or program, to provide additional functionality for apparatuses 810, 820 and/or 830. The components of apparatuses 810, 820 and/or 830 may be implemented in hardware, or as any suitable combination of hardware and software. According to certain example embodiments, apparatuses 810, 820 and/or 830 may optionally be configured to communicate with each other via a wireless or wired communications links 840, 850, and 860 according to any radio access technology, such as NR.

According to certain example embodiments, processors 812, 822 and/or 832, and memory 814, 824 and/or 834 may be included in or may form a part of processing circuitry or control circuitry. In addition, in some example embodiments, transceivers 816, 826, and 836 may be included in or may form a part of transceiving circuitry.

In some exemplary embodiments, an apparatus (e.g., apparatuses 810, 820 and/or 830) may include means for performing a method, a process, or any of the variants discussed herein. Examples of the means may include one or more processors, memory, controllers, transmitters, receivers, and/or computer program code for causing the performance of the operations.

Certain exemplary embodiments may be directed to an apparatus 810 that includes means for receiving labelled data for a machine learning model from at least one network device and means for evaluating a performance of the machine learning model based on the labelled data. The apparatus 810 may also include means for determining, based on the evaluated performance of the machine learning model, validity of the machine learning model for the at least one network device, and means for transmitting, to a user device, information on the validity of the machine learning model.

Some exemplary embodiments may be directed to an apparatus 820 that includes means for receiving, from a serving network device, information on a validity of a machine learning model for another network device and means for performing a model switching decision based on at least the information on the validity of the machine learning model. The model switching decision may determine to switch from the machine learning model of the serving network device to another machine learning model of the other network device. The apparatus 820 may also include means for transmitting an indication of the model switching decision to the other network device.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 810, 820 and/or 830) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 810, 820 and/or 830), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 6G, 5G NR and LTE technology, the above embodiments may also apply to any other present or future 3GPP technology, such as LTE-advanced, and/or fourth generation (4G) technology.

Partial Glossary:

| | |
|---|---|
| 3GPP | 3rd Generation Partnership Project |
| 5G | 5th Generation |
| CU | Centralized Unit |
| DL | Downlink |
| DU | Distributed Unit |
| EMBB | Enhanced Mobile Broadband |
| GF | Generalization Factor |
| gNB | 5G or Next Generation NodeB |
| KPI | Key Performance Indicator |
| LTE | Long Term Evolution |
| ML | Machine Learning |
| NR | New Radio |
| QoE | Quality of Experience |
| QoS | Quality of Service |
| RF | Radio Frequency |
| RRC | Radio Resource Control |
| RSRP | Reference Signal Received Power |
| RSRQ | Reference Signal Received Quality |
| SINR | Signal to Interference and Noise Ratio |
| TA | Timing Advance |
| TCI | Transmission Configuration Indicator |
| UE | User Equipment |
| UL | Uplink |

**Claims**

1.   An apparatus, comprising:

means for receiving, from a serving network device, information on a validity of a machine learning model for another network device;
means for performing a model switching decision based on at least the information on the validity of the machine learning model, wherein the model switching decision determines to switch from the machine learning model of the serving network device to another machine learning model of the other network device; and
means for transmitting an indication of the model switching decision to the other network device.

2.   The apparatus according to claim 1, wherein the information on the validity of the machine learning model is based on radio frequency fingerprinting information, and the radio frequency fingerprinting information comprises at least one of the following:

reference signal received power measurements;
reference signal received quality measurements;
signal to interference and noise ratio measurements; or
timing advance measurements.

3. The apparatus according to claim 1 or claim 2, wherein the validity of the machine learning model is determined based on at least one of the following:

a radio frequency fingerprinting information being lower than a first threshold;
the radio frequency fingerprinting information being higher than the first threshold;
a model generalization factor of the other machine learning model of the other network device being lower than a second threshold;
the model generalization factor of the other machine learning model of the other network device being higher than the second threshold;
a distance between the apparatus and the serving network device being lower than a third threshold; or
the distance between the apparatus and the serving network device being higher than the third threshold.

4. The apparatus according to any one of claims 1-3, wherein the model generalization factor of the machine learning model of the serving network device is based on a performance of the machine learning model, which is based on labelled data received from the other network device.

5. The apparatus according to any one of claims 1-4, wherein the performance of the machine learning model is based on at least a throughput of the apparatus.

6. A method, comprising:

receiving, by an apparatus from a serving network device, information on a validity of a machine learning model for another network device;
performing, by the apparatus, a model switching decision based on at least the information on the validity of the machine learning model, wherein the model switching decision determines to switch from the machine learning model of the serving network device to another machine learning model of the other network device; and
transmitting, by the apparatus, an indication of the model switching decision to the other network device.

7. The method according to claim 6, wherein the information on the validity of the machine learning model is based on radio frequency fingerprinting information, and the radio frequency fingerprinting information comprises at least one of the following:

reference signal received power measurements;
reference signal received quality measurements;
signal to interference and noise ratio measurements; or
timing advance measurements.

8. The method according to claim 6 or claim 7, wherein the validity of the machine learning model is determined based on at least one of the following:

a radio frequency fingerprinting information being lower than a first threshold;
the radio frequency fingerprinting information being higher than the first threshold;
a model generalization factor of the other machine learning model of the other network device being lower than a second threshold;
the model generalization factor of the other machine learning model of the other network device being higher than the second threshold;
a distance between the apparatus and the serving network device being lower than a third threshold; or
the distance between the apparatus and the serving network device being higher than the third threshold.

9. The method according to any one of claims 6-8, wherein the model generalization factor of the machine learning model of the serving network device is based on a performance of the machine learning model, which is based on labelled data received from the other network device.

10. An apparatus, comprising:

means for receiving labelled data for a machine learning model from at least one network device;
means for evaluating a performance of the machine learning model based on the labelled data;
means for determining, based on the evaluated performance of the machine learning model, validity of the machine learning model for the at least one network device; and
means for transmitting, to a user device, information on the validity of the machine learning model.

11. The apparatus according to claim 10, wherein the labelled data comprises radio frequency fingerprinting information, and the radio frequency fingerprinting information comprises at least one of the following:

reference signal received power measurements;
reference signal received quality measurements;
signal to interference and noise ratio measurements; or
timing advance measurements.

12. The apparatus according to claim 11, wherein the validity of the machine learning model is determined based on at least one of the following:

the radio frequency fingerprinting information being lower than a first threshold;
the radio frequency fingerprinting information being higher than the first threshold;
a model generalization factor of the machine learning model for the at least one network device being lower than a second threshold;
the model generalization factor of the machine learning model for the at least one network device being higher than the second threshold;
a distance between the apparatus and the user device being lower than a third threshold; or
the distance between the apparatus and the user device being higher than the third threshold.

13. The apparatus according to claim 12, wherein the model generalization factor is based on a performance of the machine learning model of the apparatus which is based on the labelled data received from the at least one network device.

14. The apparatus according to any one of claims 10-13, wherein the information on the validity of the machine learning model includes a model switching decision to determine to switch from the machine learning model to another machine learning model.

15. The apparatus according to any one of claims 10-14, wherein the evaluation of the performance of the machine learning model is based on at least a throughput of the user device.

FIG. 1

FIG. 2

FIG. 3

FIG. 4

FIG. 5

610 — Receive labelled data for a machine learning model from at least one network device

620 — Evaluate a performance of the machine learning model based on the labelled data

630 — Determine, based on the evaluated performance of the machine learning model, validity of the machine learning model for the at least one network device

640 — Transmit, to a user device, information on the validity of the machine learning model

## FIG. 6

710 — Receive, from a serving network device, information on a validity of a machine learning model for another network device

720 — Perform a model switching decision based on at least the information on the validity of the machine learning model

730 — Transmit an indication of the model switching decision to the other network device

FIG. 7

FIG. 8

Europäisches
Patentamt

European
Patent Office

Office européen
des brevets

## EUROPEAN SEARCH REPORT

**Application Number**

EP 24 15 0467

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YI GUO ET AL: "Functionality mapping and AI/ML algorithm locality", 3GPP DRAFT; R2-2310207; TYPE DISCUSSION; FS_NR_AIML_AIR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Xiamen, CN; 20231009 - 20231013 29 September 2023 (2023-09-29), XP052529202, Retrieved from the Internet: URL:https://www.3gpp.org/ftp/TSG_RAN/WG2_RL2/TSGR2_123bis/Docs/R2-2310207.zip R2-2310207 mapping and locality.docx [retrieved on 2023-09-29] | 1,6 | INV. H04W24/02 H04W36/00 |
| Y | * page 2 - page 5 * ----- | 2-5,7-9 | |
| Y | WO 2023/212224 A2 (INTERDIGITAL PATENT HOLDINGS INC [US]) 2 November 2023 (2023-11-02) | 2-5,7-9 | |
| A | * paragraph [0167] - paragraph [0193] * * paragraphs [0153], [0215] * ----- | 1,6 | TECHNICAL FIELDS SEARCHED (IPC) H04W |
| X | US 2023/422126 A1 (ALI-TOLPPA JANNE TAPIO [FI] ET AL) 28 December 2023 (2023-12-28) | 10,11, 14,15 | |
| Y | * paragraph [0066] - paragraph [0073]; figure 3 * * paragraph [0087] * ----- | 12,13 | |
| Y | CN 116 963 037 A (BEIJING SAMSUNG TELECOM R&D CT; SAMSUNG ELECTRONICS CO LTD) 27 October 2023 (2023-10-27) * paragraph [0174] * ----- | 12,13 | |
| A | WO 2023/101303 A1 (LG ELECTRONICS INC [KR]) 8 June 2023 (2023-06-08) * paragraph [0157] * ----- | 1-9 | |

The present search report has been drawn up for all claims

| Place of search | Date of completion of the search | Examiner |
|---|---|---|
| Munich | 26 August 2024 | Tessier, Serge |

Europäisches
Patentamt

European
Patent Office

Office européen
des brevets

**Application Number**

EP 24 15 0467

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

21

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-9

    ML model switching decision at an UE apparatus.
    - - -

2. claims: 10-15

    ML model performance evaluation at the network side.
    - - -

## ANNEX TO THE EUROPEAN SEARCH REPORT
## ON EUROPEAN PATENT APPLICATION NO.

EP 24 15 0467

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2024

| Patent document cited in search report | | Publication date | Patent family member(s) | | Publication date |
|---|---|---|---|---|---|
| WO 2023212224 | A2 | 02-11-2023 | NONE | | |
| US 2023422126 | A1 | 28-12-2023 | EP | 4252452 A1 | 04-10-2023 |
| | | | US | 2023422126 A1 | 28-12-2023 |
| | | | WO | 2022111827 A1 | 02-06-2022 |
| CN 116963037 | A | 27-10-2023 | CN | 116963037 A | 27-10-2023 |
| | | | WO | 2023211076 A1 | 02-11-2023 |
| WO 2023101303 | A1 | 08-06-2023 | KR | 20240113453 A | 22-07-2024 |
| | | | WO | 2023101303 A1 | 08-06-2023 |

EPO FORM P0459

For more details about this annex : see Official Journal of the European Patent Office, No. 12/82